# EUROPEAN PATENT SPECIFICATION

(11) **EP 0 826 900 B1**
(45) Date of publication and mention of the grant of the patent: **07.06.2000**
(21) Application number: 97120686.7
(22) Date of filing: 26.10.1993
(51) Int. Cl.: F16F 15/12, F16F 15/16, F16F 9/30

(54) **A twin mass flywheel**
Zweimassenschwungrad
Volant à deux masses

(30) Priority: 27.10.1992 GB 9222560
(43) Date of publication of application: 04.03.1998
(62) Divisional of application: 93923620.4
(73) Proprietor: AUTOMOTIVE PRODUCTS PLC, Leamington Spa Warwickshire CV31 3ER (GB)
(72) Inventor: Curtis, Anthony John, Leamington Spa, Warwickshire CV31 1RU (GB)
(74) Representative: Morrall, Roger

(56) References cited:
- EP-A- 0 450 405
- WO-A-89/01097
- FR-A- 2 637 339
- FR-A- 2 685 043
- GB-A- 2 220 464
- GB-A- 2 265 437
- DATABASE WPI Week 8035 Derwent Publications Ltd., London, GB; AN 80-61213C XP002085937 & JP 55 092800 A (MATSUSHITA ELEC IND KK) , 15 July 1980

## Description

The present invention relates to a twin mass flywheel arrangement for absorbing or compensating for torsional vibrations such as can arise in a vehicle transmission assembly.

More particularly, the invention relates to a twin mass flywheel according to the preamble of claim 1 as it is described in WO 89/01097.

A problem arises due to the pivotal linkage striking one of the flywheel masses at extremes of relative rotation, thereby causing noise.

The present invention seeks to overcome the above problem.

According to the invention there is provided a twin mass flywheel for a vehicle comprising two co-axially arranged flywheel masses which are mounted for limited angular rotation relative to each other; a plurality of pivotal linkages interconnecting the two flywheel masses each linkage comprising a first link pivotally connected to one of the flywheel masses, a second link pivotally connected to the other of the flywheel masses, and a pivot for pivotally connecting the first and second links, said linkage having a greater mass adjacent the pivot to move radially outwardly; and a damping means which in use resists relative rotation between the two flywheel masses characterised in that the damping means is a self contained viscous damping means containing viscous material and being arranged to act between the two flywheel masses.

The viscous damping means comprises two relatively rotatable parts, one part being rotatable with one flywheel mass and the second part being rotatable with the other flywheel mass, and a viscous fluid is located in a chamber formed by at least one of said parts so as to act as a viscous damper between said parts to oppose relative rotational movement therebetween.

For a better understanding of the present invention and to show more clearly how to carry it into effect reference will now be made, by way of example, to the accompanying drawings in which;
Figure 1 is a cross-sectional view of one embodiment of a twin mass flywheel taken along the line 1-1 in Figure 2;
Figure 2 is a part sectional view of the twin mass flywheel in Figure 1;
Figure 3 and Figure 4 are similar views to that in Figure 2 showing the flywheel at its extremes of movement;
Figure 5 is a section through an alternative seal arrangement for use in the flywheel arrangement shown in figures 1 to 4.
Figure 6 is a cross-sectional view through a viscous damping means according to the present invention.
Figure 7 is a partial cross-sectioned view similar to Figure 1 but showing the viscous damping means at the centre of the twin mass flywheel;
Figure 8 is a plan view of the viscous damping means taken on the line VIII-VIII of Figure 7, and
Figure 9 is similar to Figure 8 but showing alternative forms of arcuate fluid chamber.

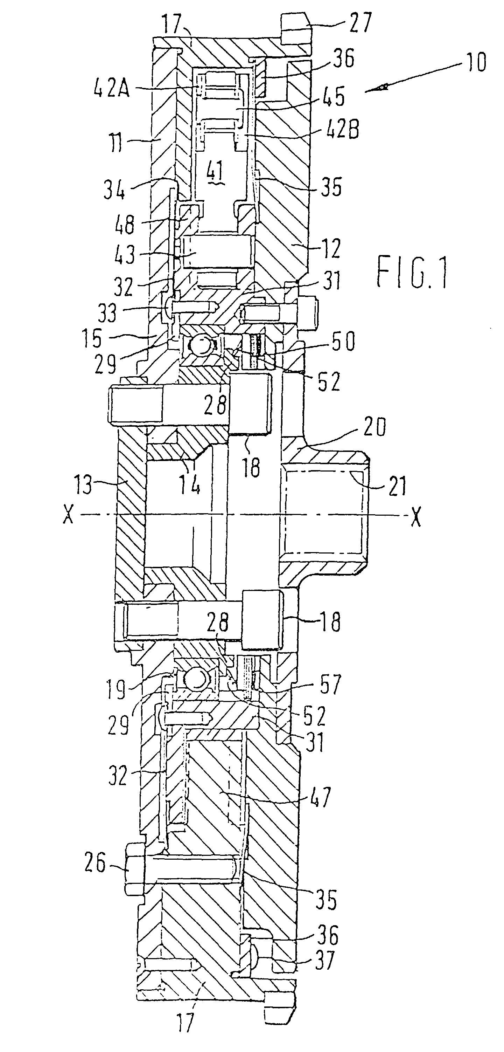

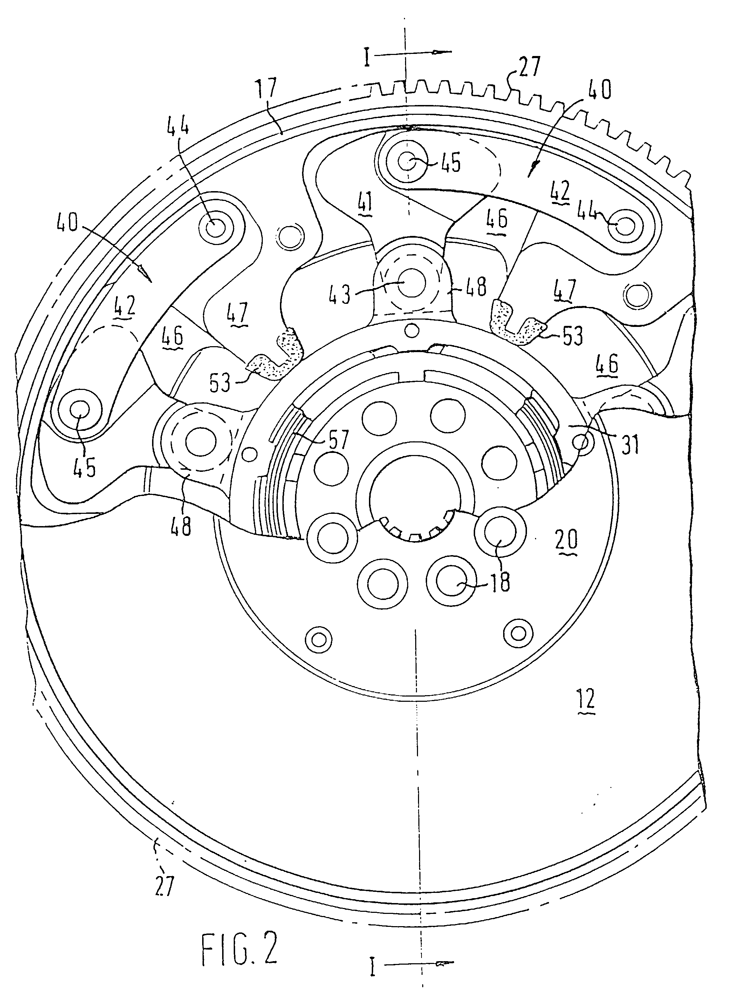

With reference to Figures 1 & 2 of the accompanying drawings there is illustrated a twin mass flywheel 10 comprising a flywheel which is divided into two flywheel masses 11 and 12. One flywheel mass 11 is fixed on a flange 13 of a crankshaft of an internal combustion engine (not shown) by way of a central hub 14 and bolts 18, and an output member 20 having splines 21 thereon is secured to the other flywheel mass 12. Alternatively a clutch could be secured to the second flywheel mass 12. Under normal drive conditions the flywheel masses 11, 12 rotate in a clockwise direction in the view shown in Figure 1. The flywheel mass 12 is mounted on the central hub 14 via a bearing 19.

The flywheel mass 11 comprises the hub 14 which is fixed on the crankshaft, an annular plate 15 fixed to the hub 14 by the bolts 18 and an annular outer mass 17 fixed to plate 15 by bolts 26 as shown in Figure 1, or for example, by rivets (not shown). A starter ring 27 is mounted on outer mass 17. The annular plate 15, hub 14, and outer mass 17 form an annular cavity.

The second flywheel mass 12 forms an end plate for enclosing the said cavity and is mounted rotatably to the first flywheel mass 11 by way of the bearing 19. The bearing 19 is non-rotatably mounted on the hub 14 and is secured in place between a flange 28 on the hub and the plate 15. The outer race of the bearing 19 is non-rotatably mounted in the centre of the flywheel mass 12 and is secured in place by means of a retaining ring 29.

Relative rotation between the two flywheel masses 11 and 12 is controlled by a plurality of pivotal linkages 40 evenly spaced around the flywheel masses, preferably there are five such linkages, and by friction damping means 50. Each pivotal linkage 40 comprises a first link 41 pivotally mounted on a lug 48 on a centre hub portion 31 of the flywheel mass 12 by way of a pivot 43 and a second link 42 pivotally mounted on the flywheel mass 11 by way of pivot 44, the two links 41 and 42 being pivotally connected to each other by means of a third pivot 45. It will be noted from Figure 1 that the pivot 43 is positioned radially inwardly of the pivots 44 and 45. The first link 41 is formed as a bob weight mass having a greater mass at its end remote from the pivot 43. The second link 42 comprises a pair of parallel arms 42A, 42B which are arranged one on each axial side of the bob weight 41.

The cavity formed by the first flywheel mass 11 is divided into five chambers 46 by partition walls 47 that extend inwardly from the outer mass 17 to a position adjacent the centre hub portion 31 of the second flywheel mass 12. A pivotal linkage 40 is located in each chamber 46.

The friction damping means 50 a stack of friction washers 57, in which alternate friction washers 57 are driven by the hub 14 of the first flywheel mass 12, and the hub portion 31 of the second flywheel mass 12. The washers 57 are urged together by a Belleville spring 52.

The radially inner ends of the partition walls 47 are covered by an elastomer seal 53 which acts as a partial seal against the hub portion 31 of the second flywheel mass.

The chambers 46 between the partition walls 47 are filled with a viscous non-newtonian medium, preferably a medium grease having a NLGI rating of 2-3 (National Lubrication Grease Institute of America). A suitable viscous material is available from Century Oils under the trade reference Luplex S2, this is a synthetic oil based grease filled with a lithium soap complex.

The chambers 46 are sealed at their axial ends (axial with respect to the axis X of rotation of the flywheel)

A first resilient seal 32 is fixed to the hub portion 31 of the second flywheel mass 12 by screws 33, which also serve to hold the retaining ring 29 in position. The resilient seal 32 is preferably a sheet metal annular diaphragm the radially outer edge of which engages the annular plate 15.

A second resilient seal 35 is fixed to outer annular mass 17 on its side adjacent the second flywheel mass 12. The resilient seal 35 is also a sheet metal annular diaphragm the radially outer portion of which is secured to the first flywheel mass by a sealing ring 36 and fixings 37, and the inner edge of which engages the second flywheel mass 12. Thus the grease in each chamber 46 is held in the chamber by the seals 32, 35 and 53.

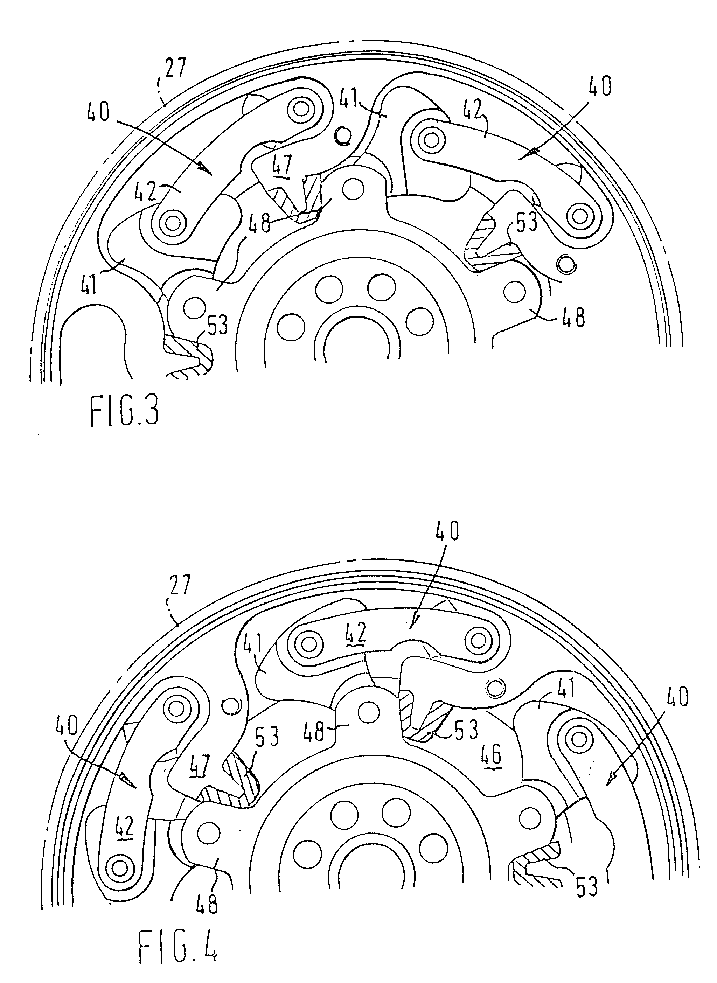

The seals 53 also act as bump stops at extremes of relative rotational movement of the two flywheel mass 11, 12 in both directions of rotation (see Figures 3 and 4)

Operation of the twin mass flywheel shown in Figure 1 to 3 will now be described. Under no-load conditions, with the engine rotating at high speeds centrifugal force acts on the pivotal linkages 40 and particularly on the bob weights 41 and urges the linkages in a radially outward direction. At higher rotational speeds the centrifugal force is greater and whilst this does not affect the configurations it greatly affects the force required to move the flywheel mass 12 relative to the flywheel mass 11.

If the clutch is engaging or is engaged and torque is transmitted from the engine to the flywheel mass 11 and then to flywheel mass 12 there is a tendency for the two masses to rotate relative to each other. At relatively low speeds when the influence of centrifugal force is small the flywheel masses move readily relative to each other. However at relatively high speeds the influence of centrifugal force is much greater and relative rotation of the flywheel masses requires greater force. In extreme drive conditions as shown in Figure 3 the linkages 40 are stretched and the seal 53 abuts one side of a lug 48.

Under conditions of over-run the effects are similar except that in the embodiments described the link 42 folds under the bob weight 41, as shown in Figure 4.

Again the wall 47 and seal 53 form a travel stop against the lugs 48 and prevent further relative movement of the flywheel masses.

Since the chambers 46 are filled with grease then the movement of the pivotal linkages 40 between the two extremes, Figure 3 and Figure 4, is damped by the grease, in that the grease provides resistance to the movement of the linkages and must flow around the bob weights 41 as they move through the respective chambers 46. Wall 47 could have oil or grease passageways in its surface adjacent to seal 32 to provide the desired flow and damping level.

The seals 53 may not be perfect seals but serve to restrict the flow of grease between adjacent chambers.

The seal 53 could have oil passageways formed therein to provide a desired grease flow and hence desired damping characteristics. For example, the seal section 53 could be formed such that the damping material can be more easily moved from chamber to chamber in a preferred direction. This could enable, for example, the damping control of the relative rotation of the flywheel massess in the drive direction to be greater than the control in the overrun direction.

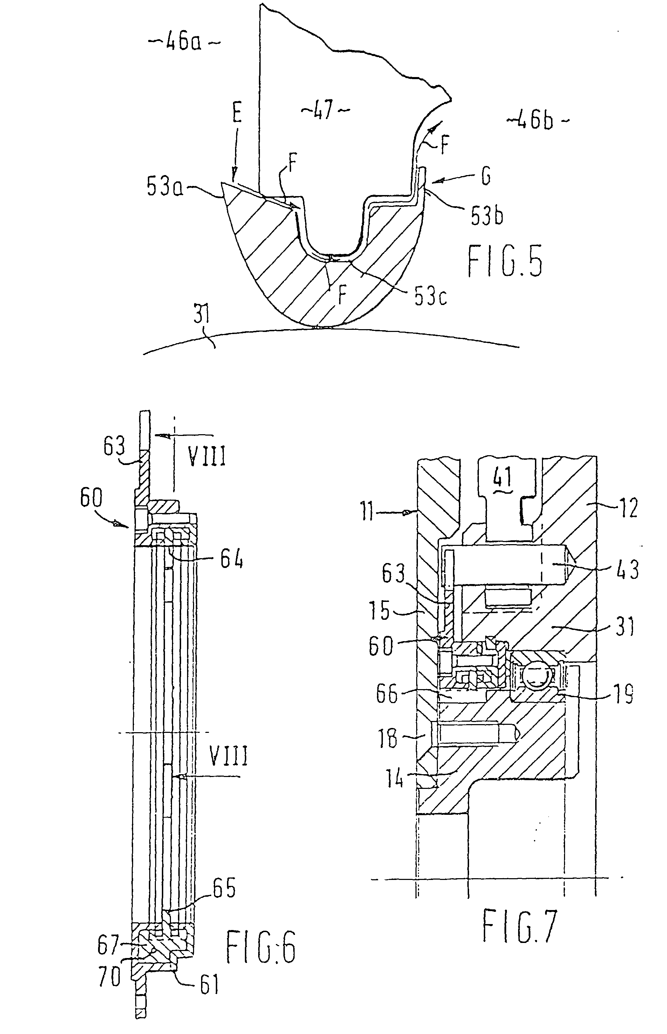

Figure 5 shows a seal arrangement in which seal 53 is provided with a one way flap valve in the form of an exposed projection 53a on one side of the seal and a flap portion 53b on the other side of the seal. A passage way 53c in seal 53 allows flow around the wall 47 from chamber 46a to chamber 46b when the pressure in chamber 46a acting on projection 53a deflects projection 53a away from wall 47 as indicated diagrammatically by arrow E. This opens up passageway 53c so that damping material can flow between wall 47 and flap portion 53b as indicated by arrows F in Figure 5. Flow in the reverse direction is prevented by the pressing of flap portion 53b against the wall 47 by locally high pressure in chamber 46b as indicated diagrammatically by arrow G.

The clearances between the links 41 and 42 and the adjacent plate 15 and seal 35 can be designed to provide further damping of the movement of links 41 and 42 as the damping material is forced through these clearances. The surfaces of the links adjacent plate 15 and seal 35 may be grooved or ridged to modify the above damping effect.

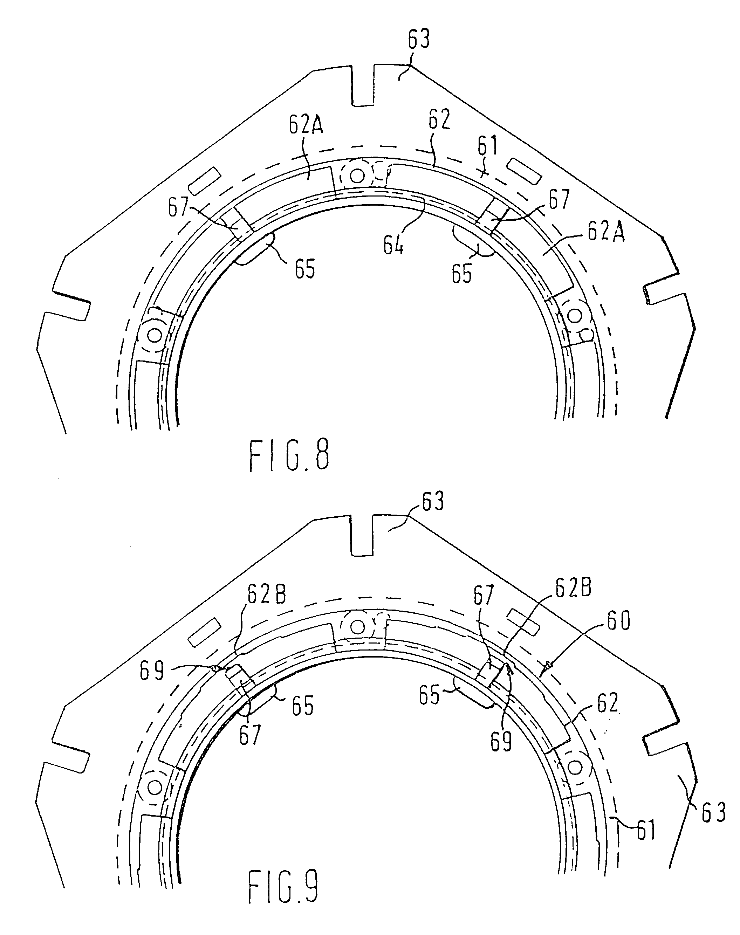

With reference to Figures 6-8, a self contained viscous fluid damper 60 is arranged to act between the two flywheel mass 11 and 12.

The fluid damper 60 is an annular damper which is located in an annular space formed between the annular plate 15, the hub 14, and the bearing 19.

The viscous damper 60 has a first outer annular part 61 having an annular fluid chamber 62 formed therein and an inner part 64 which is rotatable relative to the outer part 61. The outer part 61 has a flange 63 which is made rotationally fast with the second flywheel mass 12 by the pivot pins 43. The inner part 64 is annular having lugs 65 on its inner periphery for engaging slots 66 on the first flywheel mass 11, and paddles 67 projecting radially outwardly for circumferential movement in the chamber 62.

The annular chamber 62 may be subdivided into arcuate cavities 62A, in each of which a paddle 67 is located. The cavities 62A are filled with viscous fluid, preferably silicone fluid, and the paddles are caused to move through the cavities as the two flywheel mass rotate relative to each other. The movement of the fluid around and against the paddles provides some viscous damping to the movement of the two flywheel masses.

Figure 9 shows modified cavities 62B in which the clearances 69 around the paddles 67 have been increased to provide differing flow characteristics and have different damping characteristics. A hole 70 (see figure 6) may be provided in the faces of the paddles 67 to also provide specific damping characteristics

The self contained viscous damper arrangement shown in Figure 6 to 9 can be used with or without the damping effect of the movement of the pivotal linkages 40 in the chambers 46 described above.

A further material suitable for damping in accordance with the present invention is a two-part low strength gel such as General Electric RTV 6166 Polysiloxane. This material is poured into the chambers containing the pivotal linkages or the paddles when in liquid form and then changes state to a gel over a period of approximately 24 hours. This gel tends to chain and string its molecules when worked and thus provides the required characteristics.

## Claims

1. A twin mass flywheel (10) for a vehicle comprising two co-axially arranged flywheel masses (11,12) which are mounted for limited angular rotation relative to each other; a plurality of pivotal linkages (40) interconnecting the two flywheel masses each linkage comprising a first link (41) pivotally connected to one (12) of the flywheel masses, a second link (42) pivotally connected to the other (11) of the flywheel masses, and a pivot (45) for pivotally connecting the first and second links, said linkage having a greater mass adjacent the pivot (45) to move radially outwardly; and a damping means which in use resists relative rotation between the two flywheel masses (11,12) characterised in that the damping means is a self contained viscous damping means 60 containing viscous material and being arranged to act between the two flywheel masses (11, 12).

2. A twin mass flywheel as defined in claim 1 in which one mass of the flywheel forms a hub (14) of the twin mass flywheel and in which the fluid damper means is located in an annular space formed between an annular plate(15)of one flywheel mass, the hub (14) and a bearing (19) of the twin mass flywheel.

3. A twin mass flywheel as claimed in Claims 1 or 2 characterised in that one part (61) of the viscous damping means is rotatable with one flywheel mass (12) and provides an annular fluid chamber (62) and a second part (64) is rotatable with the other flywheel mass (11) and is formed as an annular plate having paddles (67) attached to the outer periphery thereof, the paddles being moveable through the annular chamber (62).

4. A twin mass flywheel as claimed in Claim 3 characterised in that the annular chamber (62) is subdivided into arcuate cavities 62A and each paddle (67) is located in a respective cavity.

5. A twin mass flywheel as claimed in claims 3 or 4 characterised in that said one part (61) has a radially outward flange (63) for attachment to one flywheel mass (12), and the said second part (64) has radially inwardly projecting lugs (65) for attachment to the other flywheel mass (11).

6. A twin mass flywheel as claimed in any preceding claim characterised in that the viscous material is a grease having an NLGI rating in the range 2 - 3.

7. A twin mass flywheel as claimed in Claim 6 characterised in that the grease is a synthetic grease which is filled with a lithium soap complex.

8. A twin mass flywheel as claimed in any one of claims 1 to 5 characterised in that viscous material is a gel.

## Patentansprüche

1. Doppelmassenschwungrad (10) für ein Fahrzeug, das folgende Komponenten aufweist: zwei koaxial angeordnete Schwungmassen (11, 12), die für eine begrenzte Winkeldrehung im Verhältnis zueinander angebracht sind; eine Vielzahl von Drehgelenkverbindungen (40), welche die beiden Schwungmassen untereinander verbinden, wobei jede Verbindung ein erstes Verbindungsglied (41), das drehgelenkig mit einer (12) der Schwungmassen verbunden ist, ein zweites Verbindungsglied (42), das drehgelenkig mit der anderen (11) der Schwungmassen verbunden ist, und ein Drehgelenk (45) zur drehbaren Verbindung des ersten und des zweiten Verbindungsglieds aufweist, wobei die Verbindung im Anschluß an das Drehgelenk (45) eine größere Masse zur Bewegung in Radialrichtung nach außen hat; und ein Dämpfungsmittel, das beim Betrieb der relativen Drehung zwischen den beiden Schwungmassen (11, 12) Widerstand entgegensetzt, dadurch gekennzeichnet, daß das Dämpfungsmittel ein in sich geschlossenes, viskoses Dämpfungsmittel (60) ist, das ein viskoses Material enthält und so angeordnet ist, daß es zwischen den beiden Schwungmassen (11, 12) wirksam ist.

2. Doppelmassenschwungrad nach Anspruch 1, bei dem die eine Masse des Schwungrades eine Nabe (14) des Doppelmassenschwungrades bildet und bei dem sich das Fluid-Dämpfungsmittel in einem ringförmigen Raum befindet, der zwischen einer ringförmigen Platte (15) der einen Schwungmasse, der Nabe (14) und einem Lager (19) des Doppelmassenschwungrades gebildet wird.

3. Doppelmassenschwungrad nach Anspruch 1 oder 2, dadurch gekennzeichnet, daß ein Teil (61) des viskosen Dämpfungsmittels mit einer Schwungmasse (12) drehbar ist und eine ringförmige Fluid-Kammer (62) bereitstellt, und ein zweites Teil (64) mit der anderen Schwungmasse (11) drehbar ist und als eine ringförmige Platte mit Schaufeln (67) ausgeführt ist, die an deren Außenumfang angebracht sind, wobei die Schaufeln durch die ringförmige Kammer (62) bewegt werden können.

4. Doppelmassenschwungrad nach Anspruch 3, dadurch gekennzeichnet, daß die ringförmige Kammer (62) in bogenförmige Hohlräume (62A) unterteilt ist und sich jede Schaufel (67) in einem entsprechenden Hohlraum befindet.

5. Doppelmassenschwungrad nach Anspruch 3 oder 4, dadurch gekennzeichnet, daß das eine Teil (61) einen radial nach außen verlaufenden Flansch (63) zur Anbringung an einer Schwungmasse (12) hat und daß das zweite Teil (64) in Radialrichtung nach innen vorstehende Ansätze (65) zur Anbringung an der anderen Schwungmasse (11) hat.

6. Doppelmassenschwungrad nach einem der vorhergehenden Ansprüche, dadurch gekennzeichnet, daß das viskose Material ein Schmiermittel ist, das eine NLGI-Einstufung im Bereich von 2 bis 3 hat.

7. Doppelmassenschwungrad nach Anspruch 6, dadurch gekennzeichnet, daß das Schmiermittel ein synthetisches Schmiermittel ist, das mit einem Lithium-Seifen-Komplex gefüllt ist.

8. Doppelmassenschwungrad nach einem der Ansprüche 1 bis 5, dadurch gekennzeichnet, daß das viskose Material ein Gel ist.

## Revendications

1. Volant à deux masses (10) pour un véhicule comprenant deux masses de volant à agencement coaxial (11, 12) montées de sorte à pouvoir effectuer une rotation angulaire limitée l'une par rapport à l'autre; plusieurs mécanismes de liaison à pivotement (40) connectant les deux masses du volant, chaque mécanisme de liaison comprenant une première liaison (41) connectée par pivotement à une (12) des masses du volant, une deuxième liaison (42) connectée par pivotement à l'autre (11) des masses du volant, et un pivot (45) destiné à connecter par pivotement les première et deuxième liaisons, ledit mécanisme de liaison ayant une masse plus importante près du pivot (45) en vue d'un déplacement radial vers l'extérieur; et un moyen d'amortissement résistant en service à une rotation relative entre les deux masses du volant (11, 12), caractérisé en ce que le moyen d'amortissement est un moyen d'amortissement visqueux autonome 60 contenant un matériau visqueux et agencé de sorte à agir entre les deux masses du volant (11, 12).

2. Volant à deux masses comme défini dans la revendication 1, dans lequel une masse du volant forme un moyeu (14) du volant à deux masses, et dans lequel le moyen d'amortissement de fluide est agencé dans un espace annulaire formé entre une plaque annulaire (15) d'une masse du volant, le moyeu (14) et un palier (19) du volant à deux masses.

3. Volant à deux masses selon les revendications 1 ou 2, caractérisé en ce qu'une partie (6) du moyen d'amortissement visqueux peut tourner avec une masse du volant (12) et établit une chambre de fluide annulaire (62), une deuxième partie (64) pouvant tourner avec l'autre masse du volant (11) et ayant la forme d'une plaque annulaire comportant des palettes (67) fixées à la périphérie externe correspondante, les palettes pouvant se déplacer à travers la chambre annulaire (62).

4. Volant à deux masses selon la revendication 3, caractérisé en ce que la chambre annulaire (62) est subdivisée en des cavités arquées (62A), chaque palette (67) étant agencée dans une cavité respective.

5. Volant à deux masses selon les revendications 3 ou 4, caractérisé en ce que ladite une partie (61) comporte une bride s'étendant radialement vers l'extérieur (63), destinée à être fixée à une masse du volant (12), ladite deuxième partie (64) comportant des pattes débordant radialement vers l'intérieur (65), destinées à être fixées à l'autre masse du volant (11).

6. Volant à deux masses selon l'une quelconque des revendications précédentes, caractérisé en ce que le matériau visqueux est une graisse ayant un indice NLGI compris dans l'intervalle allant de 2 à 3.

7. Volant à deux masses selon la revendication 6, caractérisé en ce que la graisse est une graisse synthétique chargée d'un complexe de savon de lithium.

8. Volant à deux masses selon l'une quelconque des revendications 1 à 5, caractérisé en ce que le matériau visqueux est un gel.
